# EUROPEAN PATENT SPECIFICATION

(11) **EP 2 374 909 B1**
(45) Date of publication and mention of the grant of the patent: **16.09.2015**
(21) Application number: 10250663.1
(22) Date of filing: 30.03.2010
(51) Int. Cl.: C22C 19/05, B22F 1/00

(54) **Improved nickel braze alloy composition**
Verbesserte Nickellötlegierungszusammensetzung
Composition améliorée d'alliage de brasage au nickel

(43) Date of publication of application: 12.10.2011
(73) Proprietor: United Technologies Corporation, Hartford, CT 06101 (US)
(72) Inventor: Minor, Michael, Arlington, Texas 76018 (US)
(74) Representative: Hall, Matthew Benjamin

(56) References cited:
- EP-A1- 1 806 418
- EP-A1- 1 859 880
- EP-A2- 1 391 531
- EP-A2- 1 783 237
- EP-A2- 1 837 104
- EP-A2- 2 113 333
- WO-A1-2004/016819
- CN-A- 101 314 853
- US-A- 3 817 719
- US-A- 4 585 481
- US-A- 5 240 491
- US-A- 5 628 814
- US-A- 5 780 116
- US-A1- 2010 196 193

## Description

This disclosure relates to alloy compositions and, more particularly, to a nickel alloy composition that provides enhanced environmental resistance.

Nickel braze alloys are commonly used for abradable coatings on nickel alloy substrates, such as gas turbine engine components. For example, nickel braze alloys used as original coatings or for coating repair may include a mixture of a high melting point nickel alloy and a lower melting point nickel alloy having a different composition. The nickel braze alloy may be applied in a repair process to worn and/or damaged areas of the substrate and then heated to a brazing temperature to wet the surfaces and flow into any pores or cracks. Upon cooling, the nickel braze alloy forms a composition that is a combination of the high melting point nickel alloy and the lower melting point nickel alloy.

One drawback of at least some known nickel braze alloys is reduced environmental resistance compared to the nickel alloy substrate. For instance, the nickel alloy of the substrate forms an oxide scale that functions as an oxygen barrier to protect the underlying nickel alloy substrate from corrosion. However, the different composition of the nickel braze alloy may form an oxide scale that is unstable or prone to spalling. Consequently, the nickel braze alloy may not be capable of providing a substantially equivalent degree of corrosion protection as the nickel alloy substrate.

US 5628814 discloses a nickel-based superalloy article having a coating which is preferably applied by mixing together two powders.

The European patent application EP 2 113 333 A2 discloses a nickel braze alloy composition which consists of a blend of two different alloy compositions for the purpose of enhancing the environmental resistance of the brazed component.

According to the present invention, the alloy composition comprises an alloy composition comprising: a blend of a first alloy, a second alloy and optionally at least one additional alloy having a composition that falls within the broad ranges of the first alloy, the first alloy having a first composition consisting of 16.5wt% - 25.5wt% of chromium, 5.5wt% - 13.0wt% of aluminum, 17.5wt%- 22.5wt% of cobalt, up to 4.5wt% of tantalum, up to 8.5wt% of tungsten, up to 0.5wt% of silicon, 0.225wt% - 1.1wt% of hafnium, 0.075wt% - 1.1wt% of yttrium, and a balance of nickel with unavoidable impurities, and the second alloy is 10-40wt% of the total weight of the blend, the second alloy having a second composition consisting of 21.0wt% - 23.0wt% of chromium, 5.5wt% - 6.5wt% of aluminum, 11.0wt% - 13.0wt% of cobalt, 5.5wt% - 6.5wt% of silicon, boron in an amount no greater than 1.0wt%, and a balance of nickel with unavoidable impurities, wherein the blend of the first alloy, the second alloy and the optional at least one additional alloy has a combined composition consisting of 17.0wt% - 24.5wt% of chromium, 5.7wt% - 10.9wt% of aluminum, 2.75wt% - 23.5wt% of cobalt, 1.25wt% - 3.9wt% of silicon, 0.09wt%-0.2wt% of boron, up to 0.167wt% of hafnium, 0.06wt% - 0.8wt% of yttrium, and a balance of nickel with unavoidable impurities.

In a preferred embodiment the combined composition consists of 17.2wt% - 24.25wt% of chromium, about 6wt% - 10.51wt% of aluminum, about 3wt% - 23wt% of cobalt, about 1.5wt% - 3.6wt% of silicon, about 0.1 wt% - 0.175wt% of boron, up to about 0.163wt% of hafnium, about 0.075wt% - 0.7wt% of yttrium, and a balance of nickel and unavoidable impurities.

Certain preferred embodiments of the present invention will now be described in greater detail by way of example only and with reference to the accompanying figure.

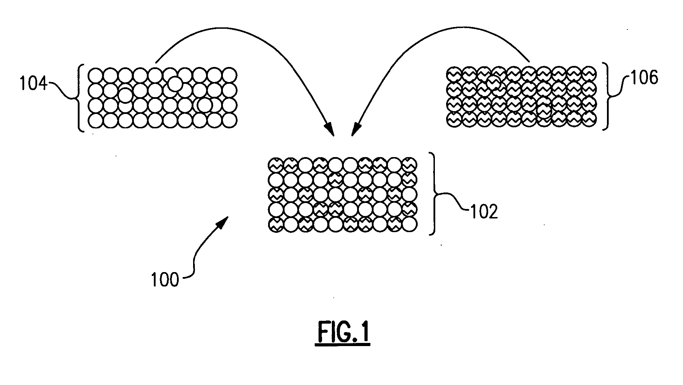

Figure 1 illustrates an example alloy composition that includes a blend of a first alloy and a second alloy.

The example alloy composition 100 illustrated in Figure 1 can be used as a nickel braze abradable coating, for example. The alloy composition 100 may also be used in other applications, such as protective coatings or as a repair material for dimensional restoration or crack repair. The alloy composition 100 may be deposited as a coating on a nickel alloy substrate, such as a gas turbine engine outer air seal located radially outwards of the turbine blades. As will be described, the alloy composition 100 provides enhanced environmental resistance.

The alloy composition 100 includes a blend 102 of a first alloy 104 and a second alloy 106. The first alloy 104 and the second alloy 106 are schematically shown as distinct powders; however, the first alloy 104 and the second alloy 106 may be in the form of distinct wires, powder slurries, or other distinct forms that are suitable for a brazing process. The distinct powders include individual particles of each of the first alloy 104 and the second alloy 106.

The first alloy 104 may be a high melting temperature alloy and the second alloy 106 may be a low melting temperature alloy relative to the high melting temperature first alloy. That is, the first alloy 104 has a different chemical composition than the second alloy 106 such that the melting temperatures are different. For instance, the first alloy 104 may have a composition that is equivalent to the composition of the substrate onto which the blend 102 will be deposited.

The first alloy 104 includes little or no boron and the second alloy 106 includes boron in an amount no greater than 1.Owt%. In one example, the second alloy 106 may include about 0.45wt% - 0.55wt% of boron. Boron contributes to lowering the melting temperature of nickel alloys but may be detrimental to forming a stable oxide scale for corrosion resistance. Thus, using the relatively low level of boron in the second alloy 106 provides the benefit of a lower melting temperature for a brazing process. Once the first alloy 104 and the second alloy 106 melt and mix in the brazing process, the composite composition of the blend 102 is relatively low in boron and capable of forming a stable oxide scale that functions as an oxygen barrier for enhanced environmental resistance.

The first alloy 104 and the second alloy 106 are selected from a variety of different compositions to achieve enhanced environmental resistance. For example, the first alloy 104 has a first composition that may include about 17wt% - 25wt% of chromium, about 6wt% - 12.5wt% of aluminum, about 18wt% - 22wt% of cobalt, up to 4wt% of tantalum, up to about 8wt% of tungsten, up to about 0.4wt% of silicon, about 0.25wt% - 1wt% of hafnium, about 0.1 wt% - 1wt% of yttrium, and a balance of nickel, and the second alloy has a second composition that may include about 21.25wt% - 22.75wt% of chromium, about 5.7wt% - 6.3wt% of aluminum, about 11.5wt% - 12.5wt% of cobalt, about 5.7wt% - 6.3wt% of silicon, boron in an amount no greater than 1.0wt%, and a balance of nickel. The term "about" as used in this description relative to compositions or other values refers to possible variation in the given value, such as normally accepted variations or tolerances in the art.

Any of the compositions of this disclosure may include only the elements listed in the particular composition. In an alternative, the disclosed compositions may additionally include only impurity elements that do not affect the properties of the alloy, such as oxidation tendencies, or elements that are unmeasured or undetectable in the alloy.

In further examples, the first alloy 104 may be any of the example compositions 1-6 in Table I below, and the second nickel alloy 106 may be the example composition 7 in Table I. In composition 1, the tungsten and tantalum contribute to strengthening the alloy composition 100 once the first alloy 104 and the second alloy 106 mix in a brazing process.

**Table I**

| **Element** | **First Alloy Powder Composition (wt%)** | | | | | | **Second Alloy Powder Composition (wt%)** |
|---|---|---|---|---|---|---|---|
| | 1 | 2 | 3 | 4 | 5 | 6 | 7 |
| Cr | 25 | 22 | 17 | | 23 | 22 | 22 |
| Al | 6 | 10 | 12.5 | 10 | 6 | 9.1 | 6 |
| Co | - | - | 22 | 75 | - | 18 | 12 |
| Ta | 4 | - | - | - | - | - | - |
| W | 8 | - | - | - | - | - | - |
| Si | - | - | 0.4 | 15 | - | - | 6 |
| B | - | - | - | - | - | - | 0.5 |
| Hf | 1 | - | 0.25 | - | - | - | - |
| Y | 0.1 | 1 | 0.6 | - | 0.5 | 0.17 | - |
| Ni | Bal. | Bal. | Bal. | - | Bal. | Bal. | Bal. |

The blend 102 may include a predetermined amount of the first alloy 104 and a predetermined amount of the second alloy 106 to achieve a desired combined alloy composition. The blend 102 may exclusively include the first alloy 104 and the second alloy 106 such that the sum of the predetermined amounts totals 100wt%. In other examples, the blend 102 may include a binder material in addition to the first alloy 104 and the second alloy 106. In further examples, the blend 102 may include other constituents, but the second alloy is 10wt% - 40wt% of the total weight of the blend 102.

The blend 102 may have a variety of different combined alloy compositions, depending on the blend ratio and compositions of the first alloy 104 and the second alloy 106. Additionally, the blend 102 may include at least one additional alloy having a composition within the broad range of the first composition but different than the selected first alloy 104. In a preferred embodiment the combined alloy composition of the blend 102 consists of about 17.2wt% - 24.25wt% of chromium, about 6wt% - 10.51wt% of aluminum, about 3wt% - 23wt% of cobalt, about 1.5wt% - 3.6wt% of silicon, about 0.1wt% - 0.175wt% of boron, up to about 0.163wt% of hafnium, about 0.075wt% - 0.7wt% of yttrium, and a balance of nickel.

In further examples, the combined alloy composition of the blend 102 may be any of the example compositions 8-19 in Tables II and Tables III below.

**Table II**

| **Element** | **Combined Alloy Powder Composition (wt%)** | | | | | |
|---|---|---|---|---|---|---|
| | 8 | 9 | 10 | 11 | 12 | 13 |
| Cr | 24.25 | 22 | 19.5 | 17.2 | 17.25 | 21.5 |
| Al | 6 | 8.8 | 9.85 | 10.5 | 8.875 | 7.75 |
| Co | 3 | 3.6 | 15.2 | 22.9 | 21.35 | 12 |
| Ta | 3 | - | - | - | - | - |
| W | 6 | - | - | - | - | - |
| Si | 1.5 | 1.8 | 2.3 | 3 | 3.6 | 2.2 |
| B | 0.125 | 0.15 | 0.175 | 0.14 | 0.1 | 0.175 |
| Hf | 0.75 | | 0.125 | 0.163 | 0.088 | 0.036 |
| Y | 0.075 | 0.7 | 0.45 | 0.4 | 0.36 | 0.258 |
| Ni | Bal. | Bal. | Bal. | Bal. | Bal. | Bal. |

**Table III**

| **Element** | **Combined Alloy Powder Composition (wt%)** | | | | | |
|---|---|---|---|---|---|---|
| | 14 | 15 | 16 | 17 | 18 | 19 |
| Cr | 21.75 | 19.8 | 22 | 18.75 | 20.85 | 22.75 |
| Al | 8.19 | 9.2 | 8.02 | 10.23 | 7.95 | 6 |
| Co | 16.1 | 9.9 | 15.9 | 18.5 | 10.8 | 3 |
| Ta | - | - | - | - | - | - |
| W | - | - | - | - | - | - |
| Si | 2.12 | 2.7 | 2.1 | 2.36 | 2.22 | 1.5 |
| B | 0.175 | 0.1 | 0.175 | 0.175 | 0.175 | 0.125 |
| Hf | 0.013 | - | - | 0.163 | 0.075 | - |
| Y | 0.132 | 0.7 | 0.11 | 0.39 | 0.355 | 0.375 |
| Ni | Bal. | Bal. | Bal. | Bal. | Bal. | Bal. |

In Tables II and III, composition 8 represents a blend of 75wt% of composition 1 (Table 1) as the first alloy and 25wt% of the second alloy 106.

Composition 9 represents a blend of 70wt% of composition 2 as the first alloy 104 with 30wt% of the second alloy 106.

Composition 10 represents a blend of 15wt% of composition 2 as the first alloy 104, 35wt% of the second alloy 106, and 50wt% of composition 3 as another alloy.

Composition 11 represents a blend of 65wt% of composition 3 as the first alloy 104, 28wt% of the second alloy 106, and 7wt% of composition 4 as another alloy.

Composition 12 represents a blend of 30wt% of composition 5 as the first alloy 104, 20wt% of the second alloy 106, and 35wt% of composition 3 and 15wt% of composition 4 additional alloys.

Composition 13 represents a blend of 15wt% of composition 3 as the first alloy 104, 35wt% of the second alloy 106, and 25wt% of composition 5 and 25wt% of composition 6 as additional alloys.

Composition 14 represents a blend of 5wt% of composition 3 as the first alloy 104, 35wt% of the second alloy 106, and 60wt% of composition 6 as an additional alloy.

Composition 15 represents a blend of 70wt% of composition 2 as the first alloy 104, 20 wt% of the second alloy 106, and 10wt% of composition 4 as an additional alloy.

Composition 16 represents a blend of 65wt% of composition 6 as the first alloy 104 and 35wt% of the second alloy 106.

Composition 17 represents a blend of 65wt% of composition 3 as the first alloy 104 and 35wt% of the second alloy 106.

Composition 18 represents a blend of 30wt% of composition 3 as the first alloy 104, 35wt% of the second alloy 106, and 35wt% of composition 5 as an additional alloy.

Composition 19 represents a blend of 75wt% of composition 5 as the first alloy and 25wt% of the second alloy 106.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. The scope of legal protection given to this disclosure may only be determined by studying the following claims.

## Claims

1. An alloy composition comprising:
a blend of a first alloy, a second alloy and optionally at least one additional alloy having a composition that falls within the broad ranges of the first alloy,
the first alloy having a first composition consisting of 16.5wt% - 25.5wt% of chromium, 5.5wt% - 13.0wt% of aluminum, 17.5wt% - 22.5wt% of cobalt, up to 4.5wt% of tantalum, up to 8.5wt% of tungsten, up to 0.5wt% of silicon, 0.225wt% - 1.1 wt% of hafnium, 0.075wt% - 1.1wt% of yttrium, and a balance of nickel with unavoidable impurities, and the second alloy is 10-40wt% of the total weight of the blend, the second alloy having a second composition consisting of 21.0wt% - 23.0wt% of chromium, 5.5wt% - 6.5wt% of aluminum, 11.0wt% - 13.0wt% of cobalt, 5.5wt% - 6.5wt% of silicon, boron in an amount no greater than 1.0wt%, and a balance of nickel with unavoidable impurities, wherein the blend of the first alloy, the second alloy and the optional at least one additional alloy has a combined composition consisting of 17.0wt% - 24.5wt% of chromium, 5.7wt% - 10.9wt% of aluminum, 2.75wt% - 23.5wt% of cobalt, 1.25wt% - 3.9wt% of silicon, 0.09wt% - 0.2wt% of boron, up to 0.167wt% of hafnium, 0.06wt% - 0.8wt% of yttrium, and a balance of nickel with unavoidable impurities.

2. An alloy composition as claimed in claim 1, wherein the first composition consists of 17wt% - 25wt% of chromium, 6wt% - 12.5wt% of aluminum, 18wt% - 22wt% of cobalt, up to 4wt% of tantalum, up to 8wt% of tungsten, up to 0.4wt% of silicon, 0.25wt% - 1wt% of hafnium, 0.1wt% - 1wt% of yttrium, and a balance of nickel with unavoidable impurities.

3. The alloy composition as recited in claim 1 or 2, wherein the first composition consists of:
(a) about 25wt% of chromium, about 6wt% of aluminum, about 4wt% of tantalum, about 8wt% of tungsten, about 1wt% of hafnium, about 0.1wt% of yttrium, and the balance of nickel with unavoidable impurities; or
(b) about 17wt% of chromium, about 12.5wt% of aluminum, about 22wt% of cobalt, about 0.4wt% of silicon, about 0.25wt% of hafnium, about 0.6wt% of yttrium, and the balance of nickel with unavoidable impurities.

4. An alloy composition as claimed in any preceding claim, wherein the second composition consists of 22wt% of chromium, 6wt% of aluminium, 12wt% of cobalt, 6wt% of silicon, 0.5wt% of boron, and the balance of nickel with unavoidable impurities.

5. An alloy composition as claimed in any preceding claim, further including an additional alloy having a composition of about 10wt% aluminium, about 75wt% cobalt, and about 15wt% of silicon.

6. An alloy composition as claimed in any of claims 1 to 4, wherein an additional alloy has a composition consisting of 17wt% - 25wt% of chromium, 6wt% - 12.5wt% of aluminum, 18wt% - 22wt% of cobalt, up to 4wt% of tantalum, up to 8wt% of tungsten, up to 0.4wt% of silicon, 0.25wt% - 1wt% of hafnium, 0.1 wt% - 1wt% of yttrium, and a balance of nickel with unavoidable impurities, but different to the first alloy.

7. An alloy composition as claimed in any preceding claim having a combined composition consisting of 17.2wt% - 24.25wt% of chromium, 6wt% - 10.51wt% of aluminum, 3wt% - 23wt% of cobalt, 1.5wt% - 3.6wt% of silicon, 0.1wt% - 0.175wt% of boron, up to 0.163wt% of hafnium, 0.075wt% - 0.7wt% of yttrium, and a balance of nickel with unavoidable impurities.

## Patentansprüche

1. Legierungszusammensetzung, umfassend:
eine Mischung aus einer ersten Legierung, einer zweiten Legierung und optional mindestens einer zusätzlichen Legierung mit einer Zusammensetzung, die in die breiten Bereiche der ersten Legierung fällt,
wobei die erste Legierung eine erste Zusammensetzung aufweist, die aus 16,5 Gewichts-% - 25,5 Gewichts-% Chrom, 5,5 Gewichts-% - 13,0 Gewichts-% Aluminium, 17,5 Gewichts-% - 22,5 Gewichts-% Kobalt, bis zu 4,5 Gewichts-% Tantal, bis zu 8,5 Gewichts-% Wolfram, bis zu 0,5 Gewichts-% Silizium, 0,225 Gewichts-% - 1,1 Gewichts-% Hafnium, 0,075 Gewichts-% - 1,1 Gewichts-% Yttrium und einem Rest Nickel mit unvermeidbaren Verunreinigungen besteht, und wobei die zweite Legierung 10-40 Gewichts-% des Gesamtgewichts der Mischung ist, wobei die zweite Legierung eine zweite Zusammensetzung aufweist, die aus 21,0 Gewichts-% - 23,0 Gewichts-% Chrom, 5,5 Gewichts-% - 6,5 Gewichts-% Aluminium, 11,0 Gewichts-% - 13,0 Gewichts-% Kobalt, 5,5 Gewichts-% - 6,5 Gewichts-% Silizium, Bor in einer Menge von nicht größer als 1,0 Gewichts-% und einem Rest Nickel mit unvermeidbaren Verunreinigungen besteht, wobei die Mischung der ersten Legierung, der zweiten Legierung und der optional mindestens einen zusätzlichen Legierung eine kombinierte Zusammensetzung aufweist, die aus 17,0 Gewichts-% - 24,5 Gewichts-% Chrom, 5,7 Gewichts-% - 10,9 Gewichts-% Aluminium, 2,75 Gewichts-% - 23,5 Gewichts-% Kobalt, 1,25 Gewichts-% - 3,9 Gewichts-% Silizium, 0,09 Gewichts-% - 0,2 Gewichts-% Bor, bis zu 0,167 Gewichts-% Hafnium, 0,06 Gewichts-% - 0,8 Gewichts-% Yttrium und einem Rest Nickel mit unvermeidbaren Verunreinigungen besteht.

2. Legierungszusammensetzung nach Anspruch 1, wobei die erste Zusammensetzung aus 17 Gewichts-% - 25 Gewichts-% Chrom, 6 Gewichts-% - 12,5 Gewichts-% Aluminium, 18 Gewichts-% - 22 Gewichts-% Kobalt, bis zu 4 Gewichts-% Tantal, bis zu 8 Gewichts-% Wolfram, bis zu 0,4 Gewichts-% Silizium, 0,25 Gewichts-% - 1 Gewichts-% Hafnium, 0,1 Gewichts-% - 1 Gewichts-% Yttrium und einem Rest Nickel mit unvermeidbaren Verunreinigungen besteht.

3. Legierungszusammensetzung nach Anspruch 1 oder 2, wobei die erste Zusammensetzung besteht aus:
(a) etwa 25 Gewichts-% Chrom, etwa 6 Gewichts-% Aluminium, etwa 4 Gewichts-% Tantal, etwa 8 Gewichts-% Wolfram, etwa 1 Gewichts-% Hafnium, etwa 0,1 Gewichts-% Yttrium und dem Rest Nickel mit unvermeidbaren Verunreinigungen; oder
(b) etwa 17 Gewichts-% Chrom, etwa 12,5 Gewichts-% Aluminium, etwa 22 Gewichts-% Kobalt, etwa 0,4 Gewichts-% Silizium, etwa 0,25 Gewichts-% Hafnium, etwa 0,6 Gewichts-% Yttrium und dem Rest Nickel mit unvermeidbaren Verunreinigungen.

4. Legierungszusammensetzung nach einem der vorangegangenen Ansprüche, wobei die zweite Zusammensetzung aus 22 Gewichts-% Chrom, 6 Gewichts-% Aluminium, 12 Gewichts-% Kobalt, 6 Gewichts-% Silizium, 0,5 Gewichts-% Bor und dem Rest Nickel mit unvermeidbaren Verunreinigungen besteht.

5. Legierungszusammensetzung nach einem der vorangegangenen Ansprüche, die weiterhin eine zusätzliche Legierung umfasst, die eine Zusammensetzung von etwa 10 Gewichts-% Aluminium, etwa 75 Gewichts-% Kobalt und etwa 15 Gewichts-% Silizium aufweist.

6. Legierungszusammensetzung nach Anspruch 1 bis 4, wobei eine zusätzliche Legierung eine Zusammensetzung aufweist, die aus 17 Gewichts-% - 25 Gewichts-% Chrom, 6 Gewichts-% - 12,5 Gewichts-% Aluminium, 18 Gewichts-% - 22 Gewichts-% Kobalt, bis zu 4 Gewichts-% Tantal, bis zu 8 Gewichts-% Wolfram, bis zu 0,4 Gewichts-% Silizium, 0,25 Gewichts-% - 1 Gewichts-% Hafnium, 0,1 Gewichts-% - 1 Gewichts-% Yttrium und einem Rest Nickel mit unvermeidbaren Verunreinigungen besteht, aber sich von der ersten Legierung unterscheidet.

7. Legierungszusammensetzung nach einem der vorangegangenen Ansprüche, die eine kombinierte Zusammensetzung aufweist, die aus 17,2 Gewichts-% - 24,25 Gewichts-% Chrom, 6 Gewichts-% - 10,51 Gewichts-% Aluminium, 3 Gewichts-% - 23 Gewichts-% Kobalt, 1,5 Gewichts-% - 3,6 Gewichts-% Silizium, 0,1 Gewichts-% - 0,175 Gewichts-% Bor, bis zu 0,163 Gewichts-% Hafnium, 0,075 Gewichts-% - 0,7 Gewichts-% Yttrium und einem Rest Nickel mit unvermeidbaren Verunreinigungen besteht.

## Revendications

1. Composition d'alliage comprenant :
un mélange d'un premier alliage, d'un second alliage et éventuellement d'au moins un alliage supplémentaire ayant une composition qui se situe dans les larges plages du premier alliage,
le premier alliage ayant une composition constituée de 16,5 % en poids - 25,5 % en poids de chrome, 5,5 % en poids - 13,0 % en poids d'aluminium, 17,5 % en poids - 22,5 % en poids de cobalt, jusqu'à 4,5 % en poids de tantale, jusqu'à 8,5 % en poids de tungstène, jusqu'à 0,5 % en poids de silicium, 0,225 % en poids - 1,1 % en poids de hafnium, 0,075 % en poids - 1,1 % en poids d'yttrium, et le reste de nickel avec des impuretés inévitables, et le second alliage est 10-40 % en poids du poids total du mélange, le second alliage ayant une deuxième composition constituée de 21,0 % en poids - 23,0 % en poids de chrome, 5,5 % en poids - 6,5 % en poids d'aluminium, 11,0 % en poids - 13,0 % en poids de cobalt, 5,5 % en poids - 6,5 % en poids de silicium, de bore en une quantité non supérieure à 1,0 % en poids, et le reste de nickel avec des impuretés inévitables, dans laquelle le mélange du premier alliage, le second alliage et en option au moins un alliage supplémentaire a une composition combinée constitué de 17,0 % en poids - 24,5 % en poids de chrome, 5,7 % en poids - 10,9 % en poids d'aluminium, 2,75 % en poids - 23,5 % en poids de cobalt, 1,25 % en poids - 3,9 % en poids de silicium, 0,09 % en poids - 0,2wt % de bore, jusqu'à 0,167 % en poids de hafnium, 0,06 % en poids - 0,8 % en poids d'yttrium, et le reste de nickel avec des impuretés inévitables.

2. Composition d'alliage selon la revendication 1, dans laquelle la première composition est constituée de 17 % en poids - 25 % en poids de chrome, 6 % en poids - 12,5 % en poids d'aluminium, 18 % en poids - 22 % en poids de cobalt, jusqu'à 4 % en poids de tantale, jusqu'à 8 % en poids de tungstène, jusqu'à 0,4 % en poids de silicium, 0,25 % en poids - 1 % en poids de hafnium, 0,1 % en poids - 1 % en poids d'yttrium, et le reste de nickel avec des impuretés inévitables.

3. Composition d'alliage selon la revendication 1 ou 2, dans laquelle la première composition est constituée de :
(a) environ 25 % en poids de chrome, environ 6 % en poids d'aluminium, environ 4 % en poids de tantale, environ 8 % en poids de tungstène, environ 1 % en poids de hafnium, environ 0,1 % en poids d'yttrium, le reste étant du nickel avec des impuretés inévitables ; ou
(b) environ 17 % en poids de chrome, environ 12,5 % en poids d'aluminium, environ 22 % en poids de cobalt, environ 0,4 % en poids de silicium, environ 0,25 % en poids de hafnium, environ 0,6 % en poids d'yttrium, le reste étant du nickel avec inévitable impuretés.

4. Composition d'alliage selon l'une quelconque des revendications précédentes, dans lequel la seconde composition est constituée de 22 % en poids de chrome, 6 % en poids d'aluminium, 12 % en poids de cobalt, de 6 % en poids de silicium, 0,5 % en poids de bore, le reste étant du nickel avec impuretés inévitables.

5. Composition d'alliage selon l'une quelconque des revendications précédentes, comprenant en outre un alliage supplémentaire ayant une composition d'environ 10 % en poids d'aluminium, environ 75 % en poids de cobalt et environ 15 % en poids de silicium.

6. Composition d'alliage selon l'une quelconque des revendications 1 à 4, dans lequel un alliage supplémentaire a une composition constituée de 17 % en poids - 25 % en poids de chrome, 6 % en poids - 12,5 % en poids d'aluminium, 18 % en poids - 22 % en poids de cobalt, jusqu'à 4 % en poids de tantale, jusqu'à 8 % en poids de tungstène, jusqu'à 0,4 % en poids de silicium, 0,25 % en poids - 1 % en poids d'hafnium, 0,1 % en poids - 1 % en poids d'yttrium, et le reste de nickel avec des impuretés inévitables, mais différent du premier alliage.

7. Composition d'alliage selon l'une quelconque des revendications précédentes, ayant une composition combinée comprenant des 17,2 % en poids - 24,25 % en poids de chrome, 6 % en poids 10,51 % en poids d'aluminium, 3 % en poids - 23 % en poids de cobalt, 1,5 % en poids - % 3,6wt de silicium, 0,1 % en poids - 0,175 % en poids de bore, jusqu'à 0,163 % en poids de hafnium, 0,075 % en poids - 0,7 % en poids d'yttrium, et le reste de nickel avec des impuretés inévitables.
